Europäisches Patentamt

European Patent Office

Office européen des brevets

(19)

(11) Publication number: **0 230 069 B1**

## EUROPEAN PATENT SPECIFICATION

(12)

(45) Date of publication of patent specification: **16.10.91**

(51) Int. Cl.⁵: **G06K 19/08**, G06K 7/14, G06K 19/06, G06K 7/06

(21) Application number: **86202188.8**

(22) Date of filing: **01.12.86**

(54) **Card and Device for the transfer of data between the card and a data processing unit.**

(30) Priority: **11.12.85 NL 8503410**

(43) Date of publication of application:
**29.07.87 Bulletin 87/31**

(45) Publication of the grant of the patent:
**16.10.91 Bulletin 91/42**

(84) Designated Contracting States:
**AT BE DE ES FR GB IT NL SE**

(56) References cited:
**WO-A-82/02968          WO-A-86/05620
FR-A- 2 505 523          GB-A- 2 016 744
NL-A- 8 105 698          US-A- 4 098 510
US-A- 4 546 241**

(73) Proprietor: **N.V. Philips' Gloeilampenfabrieken
Groenewoudseweg 1
NL-5621 BA Eindhoven(NL)**

(72) Inventor: **Opheij, Willem Gerard
Int. Octrooibureau B.V. Prof. Holstlaan 6
NL-5656 AA Eindhoven(NL)**
Inventor: **Huijser, Arie
Int. Octrooibureau B.V. Prof. Holstlaan 6
NL-5656 AA Eindhoven(NL)**
Inventor: **Thomas, Gary Evan
Int. Octrooibureau B.V. Prof. Holstlaan 6
NL-5656 AA Eindhoven(NL)**

(74) Representative: **Strijland, Wilfred et al
INTERNATIONAAL OCTROOIBUREAU B.V.
Prof. Holstlaan 6
NL-5656 AA Eindhoven(NL)**

## Description

A data exchange device for exchanging data with a card that has a micro-electronic circuit and a full circular optical storage region, and a card for use with such device.

The invention relates to a data exchange device containing a data processing unit for exchanging data between said data processing unit and a card which contains a micro-electronic circuit and a memory external to said circuit, said device comprising:

- first data transfer means for interfacing to said micro-electronic circuit;
- second data transfer means designed to scan data stored track-wise in said memory;
- third transfer means connected to said data processing unit and serving for communication with the first transfer means;
- and positioning means for positioning said card in predetermined position with respect to said second transfer means.

A device of this kind is known from French Patent Application Publication 2 505 523. The card used in connection with the known device includes a memory which is formed by a strip of magnetic material. The data is line-wise stored in the strip in successive tracks. Data transfer between the memory and the device is realized by line-wise scanning the strip of magnetic material after the card and the scanning means have been positioned with respect to one another. The card also includes a micro-electronic circuit which is connected to the first transfer means, for example electrical connection terminals, which are suitable for communication with a data processing unit.

During the line-wise scanning of the strip of magnetic material either the scanning means or the card has to be continuously moved to and fro along successive lines in order to realize the data transfer. The intermittent transport of the scanning means or the card is comparatively time-consuming. Furthermore, for each of the successive lines to be scanned the scanning means and the card must be repositioned. This operation itself is also time-consuming and, moreover, necessitates the use of precise, special positioning means. Those time-consuming operations have an adverse effect on the data transfer rate.

It is the object of the invention to provide a device in which the data transfer rate is higher and in which the positioning of the scanning means and the card with respect to successive lines is simpler and faster.

According to a first aspect of the invention, it is characterized in that

- said second data transfer means is designed for optically scanning said memory on said card along a full-circular track region and therefrom receiving optically represented information, and
- said positioning means includes a rotary retaining means for imparting to said memory a rotary motion that is coaxial with said full-circular track region.

The invention also relates to a card for use in such device, with a micro-electronic circuit and a trackwise organized memory external to said circuit, which is characterized in that said memory is an optical memory which covers a full circular track region on said card and in that both the circuit and the memory allow for substantially continuous data transfer to the data exchange device.

Because the data is stored in an at least substantially circular track, data transfer is realized by rotation of the optical memory by means of a rotary retaining means. The successive revolutions of the memory can thus be scanned continuously, so that the data transfer will be substantially faster. As a result of the continuity of the tracks, positioning with respect to successive tracks can be dispensed with. The micro-electronic circuit includes, for example a memory (RAM) and a data processor. The addition of the micro-electronic circuit increases the range of applications of the card, because card can thus be used as an active electronic element of the device.

Furthermore, the combination of the micro-electronic circuit and the optical memory enables the transfer of data between both elements of the card as well as the processing of data from the optical memory by said circuit. The latter can be used, for example for improved and safer encoding of the data stored in the card.

The use of an optical memory accommodated in the body of a card is known per se from international Patent Application PCT No. WO82/02968. The card used therein also includes, like the card, cited earlier, an optical memory which is formed by a strip so that it has the same drawbacks as the known card.

Furthermore, Patent Application WO86/05620 describes a card with optical memory only, be it in the form of a full-circular track region. Moreover, the Swedish priority document thereto has not been published before the priority filing date of the present invention.

Finally, GB-Application 2.016.744 teaches optical reading and writing in a spiral track, but not the provision of two data-handling entities on the card.

A first preferred embodiment of a device according to the invention is characterized in that said positioning means imparts said rotary motion to the card and memory combined as a single unit and wherein said first and second transfer means allow for simultaneous data transfer.

As a result, the data transfer from the memory and from the micro-electronic circuit can take place simultaneously.

Preferably, the first and the third transfer means both include an optical transmitter/receiver element. Optical communication is thus possible between the data processing unit and the microelectronic circuit. Optical communication is advantageous, because mechanical contacts can then be dispensed with.

In a further embodiment of a device in accordance with the invention, the first and the third transfer means preferably both include capacitive transfer means. The first transfer means may alternatively also include inductive transfer means. Capacitive or inductive transfer means also render mechanical contact superfluous.

An embodiment of a device in accordance with the invention is characterized in that the positioning means include a first detection system for detecting a deviation between the axis of the rotary retaining means and said centre of the circular shape, said first detection system including at least one radiation source which emits a substantially parallel beam to said circular track, and also at least two radiation-sensitive detection elements for converting radiation originating from the surface of the optical memory into an indication of said deviation, the detection elements being arranged in the path of a first-order diffraction beam which is formed from the beam by the circular track and which is deflected perpendicularly to the local track direction, the difference between the output signals of the detection elements forming a detection signal representing said indication, the positioning means being connected to the rotary retaining means in order to supply the detection signal thereto, the rotary retaining means including means for displacing the card with respect to the scanning means under the control of a detection signal received. Positioning can thus be realized by utilizing the circular track provided in the optical memory. Moreover, the use of such positioning means does not require the presence of a central hole in the optical memory, so that the optical storage capacity is higher. In addition, the manufacture of an optical memory and the card with the optical memory is simpler when the optical memory does not include a central hole.

The positioning means preferably include a second detection system, the first and the second detection system being suitable for executing said positioning operation in a first and a second direction, respectively, which are substantially mutually perpendicular. The memory card can thus be positioned in two mutually perpendicular directions.

An alternative positioning method is characterized in that the optical memory is provided with a positioning mark, the positioning means being suitable for positioning, by way of detection of the positioning mark, the card in a predetermined position with respect to the scanning means.

Preferably, the rotary retaining means includes a turntable on which there are provided clamping means for clamping the card. The rotary retaining means can thus be simply constructed.

A preferred embodiment of a device in accordance with the invention is characterized in that the optical memory is provided with a hole whose centre coincides substantially with said centre of the circular shape, the rotary retaining means including a shaft which fits in the hole of the optical memory. This embodiment enables simple positioning of an optical memory provided with a central hole and the scanning means with respect to one another.

Another preferred embodiment of a device in accordance with the invention is characterized in that the device includes a cover plate which is arranged on transport means which serve to position the cover plate against a surface of the optical memory before the positioning of the scanning means, the device furthermore including a spray nozzle for spraying a quantity of volatile liquid onto said surface before the positioning of the cover plate. The liquid applied to the optical memory by means of the spray nozzle fills any scratches in the optical memory and the cover plate ensures that the liquid cannot be spun off the surface of the optical memory during rotation.

A first preferred embodiment of a card for use in combination with a device in accordance with the invention is characterized in that the optical memory is substantially rotationally symmetrical, the data being stored in an at least substantially circular track. A rotationally symmetrical optical memory is excellently suitable for accommodating a spiral or concentric track pattern.

Preferably, the card includes a power supply source for powering the microelectronic circuit. Connection points for powering this circuit can then be dispensed with.

Peferably, the power supply source includes a photosensitive cell which is arranged on the surface of the card and which serves to convert incident light into electric energy. Powering can thus be simply realized.

Preferably, the card includes a modulatable light source which is connected to the power supply source and said circuit in order to realize the communication between the circuit and the first transfer means of the data exchange device. This enables optical data transfer between the circuit and the first transfer means.

A further preferred embodiment of a card is characterized in that the optical memory is detachably accommodated in the body of the card. Removal of the optical memory from the card renders the card unsuitable for further use, the card thus being protected.

Preferably, the optical memory includes a data layer which is accommodated on a substrate between two protective layers. The data layer is thus protected against damage, for example, scratches.

Preferably, a first protective layer is made of plastics foil, a second protective layer being made of reinforced glass or plastics with a silicon layer. A high-quality protective layer is thus obtained.

The diameter of the optical memory preferably amounts from 2 cm to 5 cm. The memory thus has ample capacity and can, moreover, be embedded in a card having standard dimensions.

The invention will be described in detail hereinafter with refernce to the drawing; therein:

Figure 1a shows a first embodiment of a card in accordance with the invention;

Figure 1b is a cross-sectional view of the card shown in Figure 1a;

Figure 2 is a cross-sectional view of a device for the transfer of data from and to a card as shown in Figure 1(a + b);

Figure 3 shows a second embodiment of a card in accordance with the invention;

Figure 4 is a cross-sectional view of a device for the transfer of data from and to a card as shown in Figure 3;

Figure 5a shows an embodiment of a positioning unit;

Figure 5b shows the path followed by the light originating from a light source of the positioning unit;

Figure 6a is a cross-sectional view of a modified device in accordance with the invention;

Figure 6b is a plan view of a detail of the modified device shown in Figure 6a.

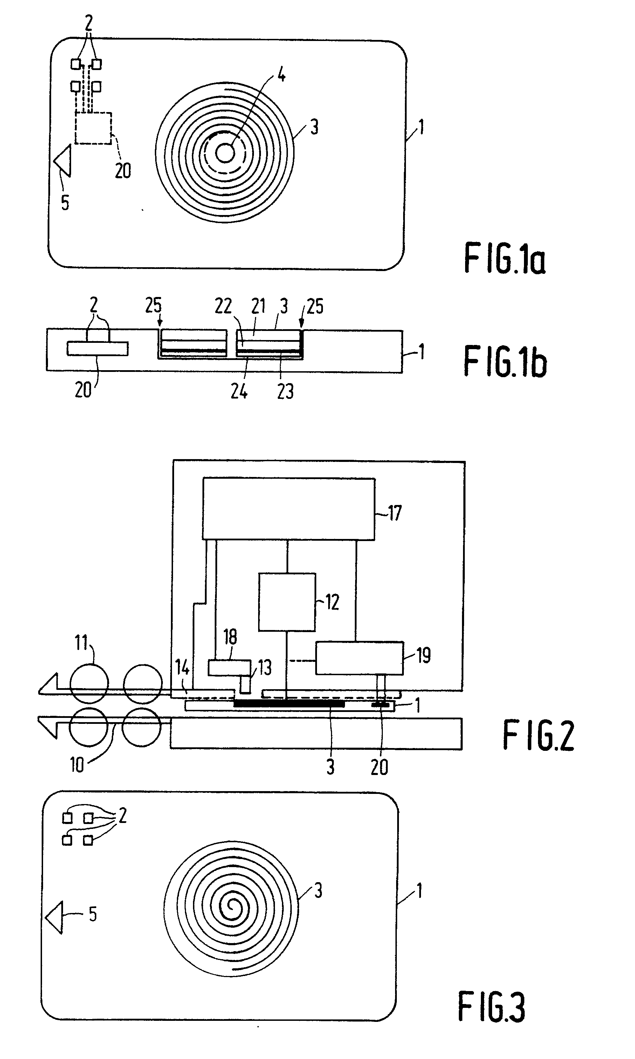

Figure 1a shows a first embodiment of a card in accordance with the invention. The card 1 is preferably made of plastics and includes electrical connection points 2 for realizing an electrical connection between a microelectronic circuit accommodated inside the card and external transfer means. The arrow 5 denotes the direction in which the card is to be introduced into a transfer device. The card furthermore includes a disc-shaped optical memory 3 wherefrom data can be read and/or wherein data can be written. The optical device is manufactured using a technology which is analogous to that used for the manufacture of optical discs such as, for example, Compact Discs (CD). In the centre of the optical memory disc there is provided a circular hole 4. The optical memory is arranged in the card in a permanently fixed or detachable manner, for example, by snapping in and out. The optical memory disc is completely or at least partly recessed in the card and is structurally integral therewith.

In the optical memory disc data is (to be) stored in digital form in an at least substantially circular track as known, for example, for CD discs or other known optical memory discs (VLP, DOR) (see, for example, the book "Principles of Optical Disc Systems", by G. Bouwhuis et al, published by Adam Hilger Ltd., Bristol and Boston, 1985). The pitch of the successive tracks of the optical memory disc preferably equals that used for CD, that is to say, 1.6μm. The advantage of this choice consists in that the tracking and correction techniques used for Compact Discs can then also be used. Moreover, this track pitch is also attractive in view of the susceptibility to scratching of the optical material. Furthermore, for the same reasons it is advantageous to use the same dimensions as used for the CD for the spot size of the scanning member. An attractive dimension for the optical memory disc is a diameter of between 2 and 5 cm, for example 3 cm. A diameter of 5 cm can still be accommodated within the standard dimensions of a memory card (8.6 x 5.4 cm). When use is made of a diameter of 3 cm, the optical memory will have a capacity of at least 500 Mbits. This high storage capacity inter alia enables the storage of protective means in the memory which require a comparatively large amount of storage capacity, for example, a colour picture of the owner, the owner's voice in encoded form, or a finger print of the owner.

An optical memory in which user information has not yet been stored is preferably provided with servo tracks during the manufacture of the memory, for example, concentric tracks or spiral tracks. During the writing of user data, the write spot of the scanning means then accurately follows the servo track. Further details of this operation are described in said book "Principles of Optical Disc Systems", Chapter 5 (Mastering). It is also possible to divide the tracks into sectors during manufacture and to provide each sector with a synchronization zone (heading).

The electrical connection points 2 are connected to circuit 20 accommodated inside the card. This circuit includes, for example, a RAM or an EEPROM and a data processor and is used, for example, for the temporary storage of erasable data or for the storage of a PIN code.

A card which includes a combination of an optical memory disc and a microelectronic circuit offers a number of advantages over the known memory cards. For example, the code used for the encoded writing of the data into the optical memory can be stated in the memory of the electronic components. Thus, a different code can be used for each series of cards, so that it is not necessary to use a fixed code for all cards. In the case of a transaction involving such a card, the transfer means or the data processor could thus fetch the code from the circuit 20 before starting a read or write operation in the optical memory. The data stored in the optical memory is thus better protected.

The high capacity of the optical memory may mean that the memory will be divided into, for example a number of segments which themselves are subdivided into a number of pages having a fixed byte length or not. This subdivision into segments and pages necessitates the use of index tables for the addressing of the data in the optical memory. When a circuit 20 is used, the index tables can be stored in the memory of the circuit 20 and the circuit can be provided with means for translating a virtual address into a physical address. The data stored in the optical memory is thus more efficiently and more safely accessed.

A further advantage of a combination of an optical memory and a microelectronic circuit on the same card consists in that the PIN code, for example can be written into the optical memory in an interleaved manner and that only the circuit 20 is capable of reading this PIN code, so that the protection of the card is improved once more. Cryptographic treatment of the data is also feasible, the encoding key then being present in the circuit 20.

Figure 1b is a cross-sectional view at an increased scale of the card shown in Figure 1a. The card preferably has a thickness of 0.7 mm (standard dimension). The optical memory preferably has a thickness of 0.5 mm and is composed of several layers. The data layer 23, for example, a tellurium alloy, is sandwiched between a first protective layer 24 and a substrate (22) and has a thickness of approximately 10μm. A second protective layer 21 is provided on the substrate. The first protective layer 24 may have a small thickness because, due to the embedding of the optical memory in the card, the card itself forms a protective layer for the lowery side of the optical memory. The first protective layer is made, for example, of a lacquer or layer of glue (photo-polymer layer). When the optical memory is rigidly connected to the memory card, the first protective layer will be glued to the memory card. The second protective layer 21 consists of, for example, a scratch-resistant silicon layer and must satisfy severe requirements as regards scratch resistance in order to prevent influencing of the data transfer. The substrate 22 of the present embodiment is composed of a thin plastics foil. A layer of reinforced glass is a suitable alternative for the combination of substrate and second protective layer. Considering the small thickness of the subtrate, the brittleness of glass will not be problematic in this respect.

In the vertical clearance between the optical memory and the edge of the recess in the card there is provided a layer of glue when the optical memory is to be permanently anchored in the card. When the optical memory is not permanently anchored, the vertical edge is provided with a profile, for example, a snap-in/out profile.

Figure 2 is a cross-sectional view of a device for transferring data from and to a card as shown in the Figures 1(a + b). The card is transported into the device by means of a feed mechanism 10 which includes a number of transport wheels 11, after which it is. positioned until the hole 4 provided in the optical memory is situated underneath the shaft of an electric motor 12. The card is subsequently sucked towards the motor by means of a suction device 14. To this end, the suction device receives a control signal from a data processing unit 17. The optical memory disc is slid onto the motor shaft by way of the hole provided for this purpose. The axis of rotational symmetry of the optical memory disc and the shaft motor will then be substantially coincident. Under the control of the data processing unit 17, the motor is subsequently activated so that the entire card is rotated by the motor shaft. The data is transported between the optical memory disc and the data processing unit 17 in the same way as in CD's, that is to say by means of the scanning means 13 which is mounted on a movable arm 18, and which successively scans the tracks.

The data transport between the circuit 20 and the data processing unit 17 takes place via the transfer means 19. The transfer means 19 in a first embodiment are formed, for example by an input/output interface which is rigidly arranged in the device and which includes a set of slide contacts which contact the connection points 2 of the card after the card has been positioned underneath the motor. Before the card is made to rotate, first the necessary data transfer between the circuit 20 and the data processing unit takes place. Therefore, via the slide contacts data is transferred from the card to the transfer means and vice versa. The transfer means 19 in a second embodiment are connected to the shaft of the motor (as denoted by a broken line) for rotation together with the card. During the positioning of the card, a connection is established between the transfer means and the connection points on the card. This connection can be realized either by means of slide contacts or in a capacitive or inductive manner. The data transport between the circuit 20 of the card and the transfer means then takes place during rotation of the card. When the connection between the circuit 20 and the transfer means requires the presence of a power supply source in the card, a possible solution consists in providing the card with a battery or photosensitive cells which convert incident light into electric energy. The connection between the circuit 20 and the transfer means could also be realized in an optical manner, for example by providing the card with a LED (including a power supply source).

The third transfer means, as a connection between the first transfer means and the data processing unit, is realized either during standstill of the transfer means, for example by means of slide contacts, or by an optical connection, or during rotation, for example in a capacitive or optical manner. Connections of this kind between a rotating and a stationary object are known from computer tomography, for example see EPA 0 149 280 or DOS 33 31 722.

It will be apparent that the device shown in Figure 2 is merely one embodiment and that other embodiments can also be used. For example, the card may be clamped in a set of clamps instead of being attracted by suction. Furthermore, it is alternatively possible to lift the optical memory out of the card and to rotate it alone by means of the shaft of the motor. Alternatively, the optical memory can be made to rotate in the card.

Figure 3 shows a second embodiment of a card in accordance with the invention. This embodiment deviates from the first embodiment in that the optical memory is not provided with a central hole. Corresponding components are denoted by the corresponding reference numerals of Figure 1. The spiral or concentric track structure now extends substantially from the centre as far as the edge of the disk.

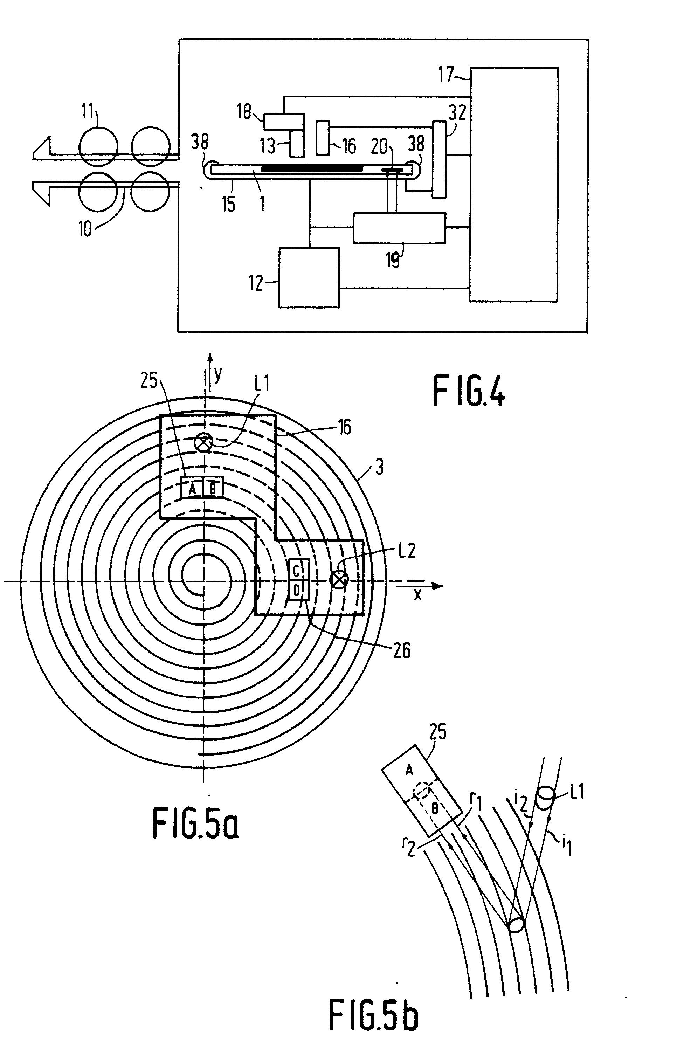

Figure 4 is a cross-sectional view of a device for the transfer of data to and from a card as shown in Figure 3. Corresponding elements in Figure 4 are denoted by the refernce numerals as used in Figure 2. A turntable 15 is connected to the motor 12 via the shaft. The turntable is suitable for accommodating and clamping a card supplied via the feed mechanism 10. The assembly formed by the turntable and the clamped card can be driven by the motor so that data is transported to and from the optical memory disc on the card by means of the scanning means 13.

The scanning means 13 is mounted, for example on a movable arm 18 as in a known CD player, so that it can be displaced along successive tracks across the surface of the optical memory. The scanning means includes, for example a semiconductor aluminium gallium arsenide (AlGaAs) laser which supplies a sufficient amount of energy for performing read as well as write operations. It will be apparent, however, that when it is merely necessary to read the card, the last power need only be sufficient for reading the optical memory. The transport of data to and from the optical memory dics, however, requires accurate positioning of the optical memory disc and the scanning means with respect to one another. For this purpose it is necessary to clamp the card accurately in a defined position. To this end, the turntable includes positioning means for moving the card on the turntable, for example, by control of the clamps 38. To this end, the clamps receive control signals from the data processing unit 17. The control signals are generated on the basis of positioning information which originates from a positioning unit 16 which is connected to an input/output interface 32 whereto the clamps are also connected. The input/output interface is also connected to the data processing unit 17. The positioning unit utilizes a detection unit which cooperates with the track pattern provided on the optical memory disc.

Figure 5a is a diagrammatic plan view of an embodiment of a positioning unit which is arranged over the track pattern of the optical disc. The positioning unit 16 includes two light sources L1 and L2, for example two LEDs, each of which preferably emits a substantially parallel light beam, and also includes two detectors 25 and 26. Figure 5b shows the path followed by the light emitted by the LED L1. The light beam $(i_1, i_2)$ emitted by the LED L1 is, for example incident at right angles on a ·number of tracks of the optical disc. Because the light spot of the LED L1 is large with respect to the track pitch which has a magnitude in the order of the wavelength of the light, the track pattern will behave as a grating which disperses the incident light. The first-order beams (or possibly beams of higher order) in the radial direction of the light $(r_1, r_2)$ dispersed by the grating and originating from L1 are intercepted by the detector 25. Each of the detectors 25, 26 includes two detection elements, for example photodiodes (A, B and C, D, respectively).

Displacement of the memory disc perpendicualry to the separating line between the two photodiodes of the same detector causes a shift of the direction of the tracks with respect to the detector at the area of the incident light, and hence a shift of the first-order dispersed light beams $(r_1, r_2)$ incident on the photodiodes. Each of the photodiodes of the same detector picks up an amount of dispersed light and the difference in intensity between the two photodiode signals provides an error signal indication. The photodiodes of each detector are aligned with respect to the mechanical axis of rotation of the turntable and their respective light source in such a manner that the memory disc is suitably positioned when the error signal indication is 0. This is because the measured intensity difference between the photodiodes equals zero when an equal amount of dispersed light is incident on both photodiodes A and B of the detector 25.

The light source 21 and the detector 25 and the light source 22 and the detector 26 enable positioning in the x-direction and the y-direction, respectively. By moving the card in the x-direction, prior to the rotation operation, until the error signal indication given by the detector 25 is zero and by subsequently moving the card in the y-direction until the error signal indication given by the detector 26 is zero, the optical memory can be accurately positioned with respect to the scanning means which is arranged to be stationary with respect to the light sources L1 and L2.

The error signal indication given by the positioning unit is converted into control signals by the data processing unit in order to be applied to the clamps, via the input/output interface 32, so that the card is displaced and correct positioning is obtained.

A simpler embodiment of the positioning unit 16 includes only one light source and one detector which includes two photodiodes. Either these photodiodes are arranged as shown in Figure 5a, in which case positioning takes place in only one direction (positioning in the other direction is then provided, for example by the fixed position of the clamps) or the light source is centrally arranged between the photodiodes and it is checked whether both photodiodes receive an equal amount of dispersed light.

The use of the positioning unit shown in Figure 5a thus enables correct positioning of the optical memory disc, even when no central hole is provided therein. It will be apparent that other possibilities also exist for positioning the card and the scanning means with respect to one another. For example, use can be made of a reference cross provided on either the memory disc or the card.

In a further embodiment of a positioning unit, the light source and the detector are mounted on an eccentric. By rotation of the light source and the detector on the eccentric and by analysis of the first-order dispersed light incident on the detector, the data processing unit can collect information as regards the position of the optical memory, said information being subsequently translated into control information for the clamps.

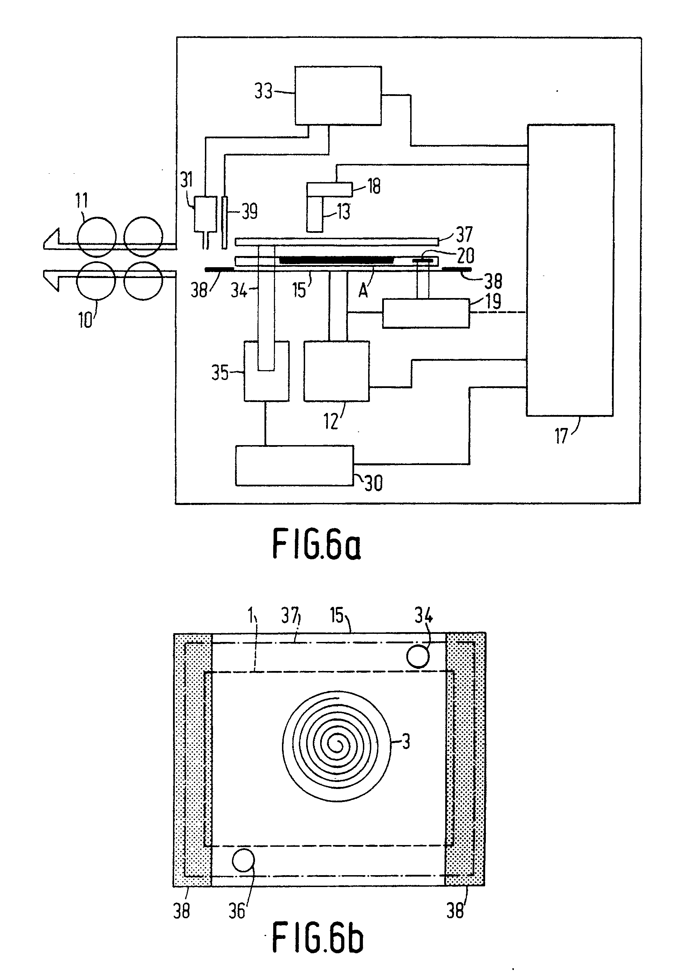

Figure 6a is a cross-sectional view of a modified version of the device shown in Figure 4. Corresponding elements are denoted by the same reference numerals as used in Figure 4. The modified version is particularly suitable for suppressing disturbances occurring in the optical transmission between the scanning means and the optical disc due to scratches in the optical disc. This is because the occurrence of scratches in the surface of the optical disc cannot be precluded during the life of such a card. Such scratches disturb the read or write beam of the scanning means, thus disturbing the data transmission.

In order to eliminate this kind of disturbance, the device shown in Figure 6 includes a glass or plastics cover plate 37 which is displaceable by means of two rods 34, 36 (only one rod is shown in Figure 6a for the sake of clarity). Each of the rods is mounted on a transport means (35), for example a piston or a gearwheel mechanism. The transport means is connected to the data processing unit 17 via a first control unit 30.

Figure 6b is a plan view of a detail of the modified device shown in Figure 6a. The cover plate 37 is mounted on the rods 34, 36 which can be laterally displaced along the card. To this end, the turntable 15 is provided with two openings wherethrough the rods can be moved. The cover plate 37 is arranged over the side of the card 1 which carries the optical memory. The clamps 38 are suitable for clamping the card as well as the cover plate.

The device shown in Figure 6a also includes a spray nozzle 31 which is controlled by a second control unit 33 which is connected to the data processing unit 17, said spray nozzle serving to spray a small quantity of a volatile liquid, for example alcohol, onto the card. The spray nozzle 31 is arranged at the entrance of the device, directly behind the feed mechanism 10, so that the liquid can be applied immediately when the card is introduced into the device.

When the card is introduced into the device, it is transported to the turntable 15 by the transport wheels 11. As soon as the card enters the device, the data processing unit 17 applies a first control instruction to the second control unit 33 which translates the first control instruction into a first activation signal for the spray nozzle 31. Under the control of the first activation signal, a small quantity of alcohol is sprayed onto the memory disc after which the spray nozzle is slightly withdrawn so as not to interfere with the clamps of the turntable 15. Subsequently, the data processing unit 17 generates a second control instruction which is applied to the first control unit 30 which translates the second control instruction into a second activation signal. Under the control of the second activation signal, the rods 34 and 36 are activated in order to arrange the plate 37 on the card. When the plate bears on the card, the rods are moved away from the turntable so as not to interfere with the rotation of the card. After removal of the rods, the clamps 38 of the turntable are activated in order to clamp the card and the glass plate arranged thereon onto the turntable. When the assembly has been clamped and positioning completed, rotation may commence so that data transport can take place.

After data transport, the plate 37 is removed under the control of the data processing unit 17 and the first control unit 30. To this end, the rods are guided to the plate again in order to lift the plate. Subsequently, the card is removed from the turntable. During this removal operation it is also possible to remove any superfluous liquid from the card. This is realized, for example by means of an absorption unit 39 (for example, a suction nozzle or a holder with an absorbing cloth) which is controlled by means of the second control unit 33.

The use of a volatile liquid and the plate 37 offers the advantage that the liquid will fill any scratches in the optical disc. The plate ensures that the liquid remains on the disc during rotation of the card. Light diffracted by the plate and the liquid can be simply corrected for.

The invention is not restricted to cards which include only one optical disc. For example, it is possible to provide the card with two optical discs, one of which is also erasable.

## Claims

1. A data exchange device containing a data processing unit (17) for exchanging data between said data processing unit and a card (1) which contains a micro-electronic circuit (20) and a memory (3) external to said circuit, said device comprising:
   - first data transfer means (19) for interfacing to said micro-electronic circuit (20);
   - second data transfer means (13; 18) designed to scan data stored track-wise in said memory (3);
   - third data transfer means connected to said data processing unit and serving for communication with the first transfer means;
   - and positioning means for positioning said card (1) in predetermined position with respect to said second transfer means (13; 18);

   characterized in that:
   - said second data transfer means (13; 18) is designed for optically scanning said memory (3) on said card (1) along a full-circular track region and therefrom receiving optically represented information, and
   - said positioning means includes a rotary retaining means for imparting to said memory (3) a rotary motion that is coaxial with said full-circular track region.

2. A device as claimed in Claim 1, wherein said positioning means imparts said rotary motion to the card and memory combined as a single unit.

3. A device as claimed in Claim 1 or 2, wherein said first and second transfer means allow for simultaneous data transfer.

4. A device as claimed in Claim 1 wherein, said first and third transfer means both comprise optical transmitter/receiver means.

5. A device as claimed in Claim 1, wherein said first and third transfer means both comprise capacitive transmitter/receiver means.

6. A device as claimed in Claim 1, wherein said first transfer means comprises inductive transmitter/receiver means.

7. A device as claimed in any of Claims 1 to 6, wherein the rotary retaining means comprise turntable means inclusive of clamping means for clamping the card.

8. A device as claimed in any of Claims 1 to 6, wherein the rotary retaining means comprise shaft means for cooperatively engaging with a hole in the card.

9. A device as claimed in any one of the preceding Claims, characterized in that the device includes a cover plate which is arranged on transport means which serve to position the cover plate against a surface of the optical memory before the positioning of the scanning means.

10. A device as claimed in Claim 9, characterized in that the device also includes a spray nozzle for spraying a quantity of volatile liquid onto said surface before the positioning of the cover plate.

11. A data exchange medium in the form of a card (1) with a micro-electronic circuit (20) and a track-wise organized memory (3) external to said circuit, characterized in that said memory is an optical memory which covers a full-circular track region on said card and in that both said micro-electronic circuit and said memory allow for substantially continuous data transfer to an external second data exchange device.

12. A medium as claimed in Claim 11, wherein said circuit allows for processing data communicated between said second data exchange device and said memory.

13. A medium as claimed in Claim 11 or 12, and comprising an internal power source for powering the micro-electronic circuit.

14. A medium as claimed in any of Claims 11 to 13, wherein the micro-electronic circuit is provided with optical/electrical conversion means for realizing data transfer with said second data exchange device.

15. A medium as claimed in any of Claims 11 to 14, furthermore comprising a centring hole that is coaxial with said full-circular track region.

16. A medium as claimed in any of Claims 11 to 15, wherein said memory has a data layer that is accommodated on a substrate between two protective layers.

17. A medium as claimed in Claim 16, wherein a first protective layer is made of plastics foil and a second layer of reinforced glass or plastics with a silicon layer.

**Revendications**

1. Dispositif d'échange de données contenant une unité de traitement de données (17) pour échanger des données entre ladite unité de traitement de données et une carte (1) qui comprend un circuit micro-électronique (20) et une mémoire (3) externe audit circuit, ledit dispositif comportant:
   - de premiers moyens de transfert de données (19) pour constituer l'interface vers ledit circuit micro-électronique (20),
   - de deuxièmes moyens de transfert de données (13; 18) destinés à explorer des données emmagasinées par pistes dans ladite mémoire (3),
   - de troisièmes moyens de transfert de données reliés à ladite unité de traitement de données et servant à communiquer avec les premiers moyens de transfert,
   - et des moyens de positionnement pour positionner ladite carte (1) dans une position prédéterminée par rapport auxdits deuxièmes moyens de transfert (13; 18),
   caractérisé en ce que:
   - lesdits deuxièmes moyens de transfert de données (13; 18) sont destinés à l'exploration optique de ladite mémoire (3) sur ladite carte (1) suivant une région présentant des pistes complètement circulaires et à recevoir de celle-ci de l'information représentée sous forme optique, et en ce que
   - lesdits moyens de positionnement comprennent des moyens de maintien rotatifs pour conférer à ladite mémoire (3) un mouvement de rotation coaxial par rapport à ladite région présentant des pistes complètement circulaires.

2. Dispositif selon la revendication 1, dans lequel lesdits moyens de positionnement confèrent ledit mouvement de rotation à la carte et à la mémoire combinées en une seule unité.

3. Dispositif selon la revendication 1 ou 2, dans lequel lesdits premiers et deuxièmes moyens de transfert permettent un transfert de données simultané.

4. Dispositif selon la revendication 1, dans lequel lesdits premiers et troisièmes moyens de transfert comportent tous les deux des moyens de transmission/réception optique.

5. Dispositif selon la revendication 1, dans lequel lesdits premiers et troisièmes moyens de transfert comportent tous les deux des moyens de transmission/réception capacitifs.

6. Dispositif selon la revendication 1, dans lequel lesdits premiers moyens de transfert comportent des moyens de transmission/réception inductifs.

7. Dispositif selon l'une quelconque des revendications 1 à 6 dans lequel les moyens de maintien rotatifs comportent des moyens en forme de plaque tournante incluant des moyens de serrage pour serrer la carte.

8. Dispositif selon l'une quelconque des revendications 1 a 6,, dans lequel les moyens de maintien rotatifs comportent des moyens en forme de tige pour être en prise de coopération avec un trou dans la carte.

9. Dispositif selon l'une quelconque des revendications précédentes, caractérisé en ce que le dispositif comprend une plaque de recouvrement disposée sur des moyens de transport servant à positionner la plaque de recouvrement contre une surface de la mémoire optique avant le positionnement des moyens de balayage.

10. Dispositif selon la revendication 9, caractérisé en ce que le dispositif comprend également une tuyère de vaporisation pour vaporiser une certaine quantité de liquide volatile sur ladite surface avant le positionnement de la plaque de recouvrement.

**11.** Milieu d'échange de données en forme d'une carte ayant un circuit micro-électronique (20) et une mémoire organisée par pistes (3) externe audit circuit, caractérisé en ce que ladite mémoire est une mémoire optique recouvrant une région présentant des pistes complètement circulaires sur ladite carte et en ce que le circuit micro-électronique et ladite mémoire permettent tous les deux le transfert de données effectué d'une manière pratiquement continue à un deuxième dispositif d'échange de données externe.

**12.** Milieu selon la revendication 11, dans lequel ledit circuit permet de traiter des données communiquées entre ledit deuxième dispositif d'échange de données et ladite mémoire.

**13.** Milieu selon la revendication 11 ou 12, comportant une source d'alimentation interne pour alimenter le circuit micro-électronique.

**14.** Milieu selon l'une quelconque des revendications 11 à 13 dans lequel le circuit micro-électronique est pourvu de moyens de conversion optiques/électriques pour effectuer le transfert de données à l'aide du deuxième dispositif d'échange de données.

**15.** Milieu selon l'une quelconque des revendications 11 a 14, comportant en outre un trou de centrage coaxial avec ladite région présentant des pistes complètement circulaires.

**16.** Milieu selon l'une quelconque des revendications 11 à 15, dans lequel ladite mémoire présente une couche de données disposée sur un substrat entre deux couches de protection.

**17.** Milieu selon la revendication 16, dans lequel une première couche de protection est faite d'une feuille en plastique et dans lequel une deuxième couche est faite de verre renforcée ou de plastique avec une couche de silicium.

**Patentansprüche**

**1.** Datenaustauschanordnung, die einen Datenprozessor (17) zum Austauschen von Daten zwischen dem Datenprozessor und einer Karte (1) besitzt, die eine mikroelektronische Schaltung (20) und einen außerhalb dieser Schaltung befindlichen Speicher (3) enthält, und die Anordnung enthält

- ein erstes Datenübertragungsmittel (19) als Schnittstelle bei der mikroelektronischen Schaltung (20),
- ein zweites Datenübertragungsmittel (13, 18) zum Abtasten spurenweise in den Speicher (3) eingeschriebener Daten,
- ein drittes Datenübertragungsmittel in Verbindung mit dem Datenprozessor und zum Kommunizieren mit dem ersten Datenübertragungsmittel,
- und ein Positioniermittel zum Positionieren der Karte (1) an einer vorgegebenen Stelle in bezug auf das zweite Datenübertragungsmittel (13, 18),

dadurch gekennzeichnet, daß

- das zweite Datenübertragungsmittel (13, 18) zum optischen Abtasten des Speichers (3) auf der Karte (1) über ein vollkreisförmiges Spurengebiet und zum Empfangen daraus optisch dargestellter Information ausgelegt ist, und
- das Positioniermittel ein drehbares Haltemittel enthält, das dem Speicher (3) eine Drehbewegung erteilt, die dem vollkreisförmigen Spurengebiet koaxial ist.

**2.** Anordnung nach Anspruch 1, dadurch gekennzeichnet, daß das Positioniermittel die Drehbewegung der Karte und dem Speicher in der Kombination als einfache Einheit erteilt.

**3.** Anordnung nach Anspruch 1 oder 2, worin das erste und das zweite Datenübertragungsmittel gleichzeitigen Datentransport ermöglichen.

**4.** Anordnung nach Anspruch 1, worin sowohl das erste als auch das dritte Datenübertragungsmittel ein optisches Sender/Empfängermittel enthalten.

**5.** Anordnung nach Anspruch 1, worin sowohl das erste als auch das dritte Datenübertragungsmittel ein kapazitives Sender/Empfängermittel enthalten.

**6.** Anordnung nach Anspruch 1, worin das erste Datenübertragungsmittel ein induktives Sender/Empfängermittel enthält.

**7.** Anordnung nach einem der Ansprüche 1 bis 6, worin das drehbare Haltemittel ein Drehtellermittel einschließlich Klemmittel zum Einklemmen der Karte enthält.

**8.** Anordnung nach einem der Ansprüche 1 bis 6, worin das drehbare Haltemittel eine Achse zum zusammenarbeitenden Passen in ein Loch in der Karte enthält.

**9.** Anordnung nach einem oder mehreren der vorangehenden Ansprüche, dadurch gekennzeichnet, daß die Anordnung eine Abdeckplatte enthält, die auf einem Transportmittel angebracht ist, das zum Positionieren der Abdeckplatte an einer Oberfläche des optischen Speichers vor dem Positionieren des Abtastmittels dient.

10. Anordnung nach Anspruch 9, dadurch gekennzeichnet, daß die Anordnung ebenfalls eine Spritzdüse zum Aufspritzen einer Menge flüchtiger Flüssigkeit auf die Oberfläche vor dem Positionieren der Abdeckplatte enthält.

11. Datenaustauschmedium in Form einer Karte (1) mit einer mikroelektronischen Schaltung (20) und einem spurenweise organisierten Speicher (3) außerhalb der Schaltung, dadurch gekennzeichnet, daß der Speicher ein optischer Speicher ist, der ein vollkreisförmiges Spurengebiet auf der Karte bestreicht, und daß sowohl die mikroelektronische Schaltung als auch der Speicher im wesentlichen ununterbrochene Datenübertragung auf eine externe zweite Datenaustauschanordnung ermöglichen.

12. Medium nach Anspruch 11, worin die Schaltung das Bearbeiten von Daten ermöglicht, die zwischen der zweiten Datenaustauschanordnung und dem Speicher kommuniziert werden.

13. Medium nach Anspruch 11 oder 12, und mit einer inneren Stromquelle zum Versorgen der mikroelektronischen Schaltung.

14. Medium nach einem der Ansprüche 11 bis 13, worin die mikroelektronische Schaltung mit einem optisch/elektrischen Wandler zum Verwirklichen von Datenübertragung mit dem zweiten Datenaustauschanordnung versehen ist.

15. Medium nach einem der Ansprüche 11 bis 14, weiter noch mit einem Zentrallöch, das dem vollkreisförmigen Spurengebiet koaxial ist.

16. Medium nach einem der Ansprüche 11 bis 15, worin der Speicher eine Datenschicht besitzt, die sich auf einem Substrat zwischen zwei Schutzschichten befindet.

17. Medium nach Anspruch 16, worin eine erste Schutzschicht aus Kunststoff-Folie und eine zweite Schicht aus verstärktem Glas oder Kunststoff mit einer Siliziumschicht hergestellt sind.

FIG.1a

FIG.1b

FIG.2

FIG.3

FIG.4

FIG.5a

FIG.5b

FIG.6a

FIG.6b